# EUROPÄISCHE PATENTSCHRIFT

(11) **EP 1 179 976 B1**
(45) Veröffentlichungstag und Bekanntmachung des Hinweises auf die Patenterteilung: **28.08.2019**
(21) Anmeldenummer: 00929477.8
(22) Anmeldetag: 03.05.2000
(51) Int. Cl.: A01J 5/007, A01J 5/08, A01J 5/04

(54) **VORRICHTUNG UND VERFAHREN ZUM MELKEN**
DEVICE AND METHOD FOR MILKING
DISPOSITIF ET PROCEDE DE TRAITE

(30) Priorität: 05.05.1999 DE 19920729
(43) Veröffentlichungstag der Anmeldung: 20.02.2002
(73) Patentinhaber: Ahrweiler, Christian, 21379 Echem (DE); Schütte, Eckhard, 21379 Echem (DE)
(72) Erfinder: Ahrweiler, Christian, 21379 Echem (DE); Schütte, Eckhard, 21379 Echem (DE)
(74) Vertreter: Schubert, Klemens
(86) Internationale Anmeldenummer: PCT/EP2000/003942
(87) Internationale Veröffentlichungsnummer: WO 2000/067560

(56) Entgegenhaltungen:
- EP-A- 0 430 526
- WO-A-98/28969
- DD-A- 86 709
- DE-A- 2 046 276
- DE-U- 1 937 122
- GB-A- 2 078 077
- US-A- 4 936 254

## Beschreibung

Die Erfindung betrifft eine Vorrichtung und ein Verfahren zum Melken von Tieren, insbesondere von Milchkühen, wobei ein Melkzeug verwendet wird, in dem eine oder mehrere Milchleitungen gegenüber der Umgebung einen Unterdruck aufweisen, so dass das Tier oder die Tiere gemolken werden bzw. so, dass die Milch abgeleitet wird.

Zum Melken von Tieren werden heutzutage Melkanlagen mit oder ohne automatisches Ansetzen und/oder Abnehmen der Melkbecher verwendet, die zumindest ein Melkzeug, eine Melksteuerung, zumeist einen Computer, einen Milchsammeltank sowie weitere Nebenanlagen und Leitungen aufweisen. Insbesondere beim Melken von Milchkühen ist es üblich, ein Melkzeug zu verwenden, das Melkbecher hat, die an Zitzen des Tieres oder der Tiere angesetzt werden. Die Melkbecher weisen sogenannte Zitzengummis auf, die einstückig und im wesentlichen rotationssymmetrisch ausgebildet sind. Die Zitzengummis werden im Innern jeweils eines Melkbechers angeordnet, so dass der Melkbecher mit dem Zitzengummi über die Zitzenöffnung gestülpt werden kann und sich die Zitze dann an ihrem Außenumfang in Anlage zu dem Zitzengummi befindet. Das untere Ende des Melkbechers weist eine Öffnung auf, durch die die aus der in dem Melkbecher befindlichen Zitzenöffnung strömende Milch abgeleitet wird. Der Melkbecher bzw. das Zitzengummi werden durch den Unterdruck in dem Melkzeug an den Außenumfang der Zitze angedrückt und dort während des Melkvorganges gehalten.

Bei der gängigsten Ausführungsform eines derartigen Melkzeuges unterteilt das Zitzengummi den Melkbecher in einen inneren und einen äußeren Teilraum. Der äußere Teilraum dient der Steuerung des Melkvorganges, indem der äußere Teilraum zyklisch abwechselnd evakuiert und wieder belüftet wird. Im Ergebnis treten zyklische Unterdruckschwankungen in dem äußeren Teilraum auf, die typischerweise eine Zykluslänge von ca. 1 Sekunde haben. Unterhalb der Zitzenöffnung, d.h. zwischen der Zitzenöffnung und der Abflussöffnung des Zitzenbechers weist das Zitzengummi einen ventilartigen Bereich auf. Im entspannten Zustand, **d.h.** wenn in dem inneren und dem äußeren Teilraum keine oder nur geringfügige Druckunterschiede herrschen, oder wenn der Druck im äußeren Teilraum größer ist, liegen einander gegenüberliegende Wandungsbereiche des Zitzengummis aneinander an und verschließen die Durchtrittsöffnung, durch die die Milch aus der Zitze in eine Ableitung abführbar ist. Durch die Evakuierung des äußeren Teilraums wird der Druck in dem äußeren Teilraum unter den Druck in dem inneren Teilraum gesenkt, so dass sich die aneinander anliegenden Wandungsbereiche trennen und die Durchtrittsöffnung freigeben. Diese Saugphase, in der wegen des Unterdrucks in dem Melkzeug Milch aus der Zitze durch die Zitzenöffnung abgesaugt wird, dauert bei einer Zykluslänge von etwa 1 Sekunde etwa 0,6 Sekunden. Durch die Belüftung des äußeren Teilraums erhöht sich der Druck wieder und der ventilartige Bereich gelangt wieder in den Schließzustand. Auf die Saugphase folgt daher die sogenannte Entlastungsphase mit einer Länge von typischerweise 0,4 Sekunden.

Während der Entlastungsphase verschließt das Zitzengummi die Zitzenöffnung und massiert bzw. presst Blut und Gewebeflüssigkeit in der Zitzenwandung wieder zurück Richtung Euter. Dieser Vorgang stellt einen wichtigen Regenerierungsprozess für die Zitze dar, da andernfalls die Zitze aufgrund des Unterdrucks während des Melkvorganges immer mehr anschwillt. Dabei verengt sich auch der Milchflusskanal im Innern der Zitze. Wird die Zitze nicht oder nicht ausreichend regeneriert, nimmt folglicherweise mit fortschreitender Dauer des Melkvorganges der Milchstrom durch die Zitze ab. Nach dem oben beschriebenen zyklischen Verfahren betriebene Melkanlagen haben daher immanente Vorteile gegenüber Melkanlagen, die nicht zyklisch betrieben werden, und gegenüber Melkanlagen, die weder Blut noch Gewebeflüssigkeit zurückmassieren (kontinuierlicher oder quasi-kontinuierlicher Milchentzug). Außer dem bereits genannten Vorteil der zyklischen Verfahren ist noch der weitere Vorteil zu nennen, dass die zu melkenden Tiere bei zyklischem Milchentzug wesentlich ruhiger bleiben, wodurch sich das Melkzeug in der Praxis wesentlich leichter handhaben lässt. Erinnert sich nämlich die Kuh an das unangenehme Gefühl beim Melken, wird sie beim Ansetzen des Melkzeuges unruhig sein. Dies wiederum kann zu Fehlern beim Ansetzen der Melkbecher führen, so dass die Zitzenöffnung und/oder das Melkzeug unter Umständen kontaminiert werden.

Zum Ausgleich von Druckschwankungen ist es daher bekannt, eine Luftzuführung in ein Sammelstück vorzusehen. Das Sammelstück ist ein Sammelelement für die von den einzelnen Zitzen strömende Milch. Dabei befindet sich ein Belüftungsloch im oberen Bereich des Sammelstücks, wo sich keine gesammelte Milch befindet.

Bei den üblicherweise verwendeten zyklisch arbeitenden Melkanlagen ist es auch bekannt, dass die Zitzengummis am oberen Ende des Melkbechers, d.h. dem Ende zum Einführen der Zitzen, einen ringartigen Wulst aufweisen. Der Wulst setzt am Rand des harten Zitzenbecher-Materials an und deckt das harte Material im Bereich des Randes sowohl an der Innenseite als auch an der Außenseite ab. Bei an die Zitze angesetztem Zitzenbecher puffert der Wulst somit die Zitze und den Euter gegen das harte Material des Zitzenbechers ab. Dabei bildet der Wulst zusammen mit der Zitze und unter Umständen dem Euterboden einen ringförmigen Hohlraum um den Zitzenansatz herum. Die Zitzenbecher werden üblicherweise in ihren Abmessungen an die Größe, insbesondere Dicke der Zitzen angepasst, d.h. es wird ein Zitzenbecher mit geeigneten Abmessungen ausgewählt. Gegen Ende des Melkvorganges kann es zum Leerlaufen der Zitze kommen, d.h. es strömt keine Milch mehr oder nur noch wenig Milch durch die Zitze, obwohl in dem unteren Bereich des Zitzenbechers noch Unterdruck herrscht. Dies kann dazu führen, dass die Zitze tiefer in den Zitzenbecher hineingezogen wird und ein Teil des Euters im Bereich des Zitzenansatzes ausgebeult wird. Auch dieser Effekt ist unerwünscht, denn er kann bereits gegen Ende des Melkvorganges zum Abklemmen des Milchkanals führen, so dass ein Leermelken nicht mehr möglich ist. Weiterhin kommt es zu Gewebeschädigungen, auf die Tiere mit Unruhe reagieren, die ein späteres Melken erschweren oder sogar zu einer Infektion oder Erkrankung des Tieres führen.

Ein weithin bekanntes Problem in diesem Zusammenhang stellt die Infektion mit Mastitiserregern dar. Sind derartige Erreger vorhanden, können sie nicht nur bei kontinuierlichem Milchentzug, sondern auch bei zyklischem Milchentzug unter bestimmten Umständen in die Zitze eindringen.

Aus der DE 1 937 122 U ist es bekannt, dass an einer Melkanlage ein Melkzeug Verwendung findet, welches ein Zitzengummi mit einem Zitzengummikopf aufweist, wobei das Zitzengummi eine Zitzeneinlassöffnung und eine Auslassöffnung besitzt, die über einem Schaft der Zitzeneinlassöffnung gegenüber angeordnet ist. In unmittelbarer Nähe zum Zitzengummikopf weist das Zitzengummi zumindest eine weitere Öffnung zum Durchfluss eine Fluides auf.

Aufgabe der vorliegenden Erfindung ist es, ein Verfahren und eine Vorrichtung zum zyklischen Melken von Tieren, insbesondere Milchkühen, der eingangs genannten Art anzugeben, bei denen ein Milchstrom in eine der normalen Milchflussrichtung beim Melken umgekehrte Richtung zumindest weitestgehend vermieden wird.

Diese Aufgabe wird durch eine gerichtete Luftzufuhr gelöst, wie sie mittels einer Vorrichtung mit den Merkmalen des Anspruches 1 wie auch mit einem Verfahren mit den Merkmalen der Ansprüche 7 und 11 erzielt wird. Vorteilhafte Weiterbildungen werden mit den Merkmalen der abhängigen Ansprüche angegeben.

Abhängig von den Druckverhältnissen in den Milchleitungen und insbesondere in einer kurzen Milchleitung in unmittelbarer Umgebung unter einer Zitzenöffnung, durch die die Milch beim Melken abgeführt wird, kann es kurzzeitig zu einer Strömung in umgekehrter Richtung entgegen der normalen Milchflussrichtung kommen. Tritt eine solche umgekehrte Strömung im Bereich der Zitzenöffnung auf, so kann es einerseits zum Umspülen des Zitzenendes und damit zum Abwaschen der in diesem Bereich an der Oberfläche der Zitze vorhandenen Erreger kommen und andererseits zu dem Transport der Erreger in die Zitze hinein oder sogar in den Euter hinein kommen. Die Erreger können aber nicht nur von der Außenseite dieser Zitze stammen, sondern bei entsprechenden Rückströmen auch von anderen Zitzen, die gleichzeitig an das Melkzeug bzw. die Melkanlage angeschlossen sind. Auf diese Weise kann daher sogar eine Infektion zwischen verschiedenen Vierteln des Euters übertragen werden. Auch besteht die Gefahr, dass ein mit Erregern kontaminiertes Melkzeug bei einer Rückströmung eine noch nicht infizierte Kuh ebenfalls infiziert. Überraschenderweise lässt sich mit den im folgenden vorgeschlagenen Mitteln und Verfahren eine derartige Infektion vermeiden.

Ein weiterer Gedanke der Erfindung liegt darin, dass während des Melkvorganges durch zumindest eine Luftzuführöffnung Luft in die Ableitung zugeführt wird, durch welche Milch aus einer Zitze eines zu melkenden Tieres beim Melken abgeleitet wird.

Dieses Verfahren kann nicht nur bei den oben beispielhaft beschriebenen zyklisch arbeitenden Melkanlagen mit einstückigen Zitzengummis Anwendung finden, sondern ganz allgemein bei Melkzeugen, die ein Steuermittel zur Steuerung des Milchstromes aus der Zitze in die Ableitung aufweisen, wobei das Steuermittel wiederkehrend, insbesondere zyklisch, den durch Unterdruck in der Ableitung bewirkten Milchstrom durch die Zitzenöffnung unterbricht. Das Steuermittel ist insbesondere ein Zitzengummi wie oben beschrieben, wobei das Zitzengummi nicht nur aus Gummi, sondern auch aus jedem anderen geeigneten elastischen Material bestehen kann.

Die Luftzuführung in die Ableitung hat, wie Messungen des Druckgradienten in der Ableitung bestätigt haben, zur Stabilisierung des Druckgradienten geführt. Die physikalische Begründung dieses Effekts ist noch nicht abschließend gefunden. Erste Ergebnisse und Überlegungen deuten jedoch darauf hin, dass bei konventionellen zyklisch arbeitenden Melkanlagen ohne Luftzuführung allenfalls durch unbeabsichtigte Undichtigkeiten im Bereich des Melkbechers geringfügig und nicht in ausreichender Menge Luft zuströmen kann, um die durch die zyklische Betriebsweise bedingten Druckwechsel im Bereich der Ableitung kompensieren zu können.

Insbesondere erlaubt die Zuführung und Durchströmung von einem Fluid, in diesem Falle Luft als gewünschtes Umgebungsmittel, dass das Melken mit einem Melkanlagenvakuum von höchstens 34 kPa, besser höchstens 30 kPa betrieben werden kann. Die Definition des Melkanlagenvakuums, das Nennvakuum, ebenso wie die Art der Messung sind aus der DIN ISO 3918 und der DIN ISO 6690 zu entnehmen, auf die wie auch auf die darin angesprochenen Normen wie beispielsweise die DIN ISO 5707 auch für weitere Begriffe, Messungen, Aufbauten, verwendbare Materialien, Abmessungen, Leistungen, Verfahren und Definitionen für den Rahmen dieser Offenbarung ausdrücklich verwiesen wird. Es ist sogar möglich, dass das Anlagenvakuum noch niedriger ist, etwa bei 28 kPa. Dabei wird im Mittel ein etwa 4 kPa niedriger Druck am Zitzengummi selbst gemessen. Das System mit Kopfbelüftung und zielgerichteter Zitzenlängsströmung erlaubt es, dass Werte von unterhalb 26 kPa einstellbar sind, somit am Zitzengummi selbst nur das gerade notwendige Vakuum eingestellt werden braucht, welches ein Öffnen des Milchlochkanales der Zitze und damit des Abflusses der Milch aus der Zitze erlaubt. Dieser Wert liegt beispielsweise für eine Milchkuh bei ungefähr 22 kPa. Für andere zu melkende Tiere wie beispielsweise Ziegen, Kamele werden ebenfalls entsprechend niedrige Anlagenvakuumwerte eingestellt, die vorzugsweise nur höchstens 12 kPa über einem zur Öffnung des Milchkanals minimal notwendigen Anlagenvakuum liegen.

Eine derartig niedrige Einstellung des Vakuums in der Anlage und damit des resultierenden Ergebnisses zwischen dem Zitzengummi und der Zitze selbst führt dazu, dass die Belastungen an den Zitzen während des Melkvorganges nur noch äußerst gering sind. Daher eignet sich dieses Melksystem insbesondere auch zur Anwendung bei Milchvieh, welches Hyperkeratosen aufweist. Dazu wird ein Baukastensystem an geeigneten Zitzengummis verwendet, beginnend mit einem herkömmlichen Zitzengummi, welches eine Shore-Härte von **20** etwa 55 beispielsweise einer Mischung aus NBR/SBR-Material hat. Das Melkanlagenvakuum wird in der ersten Stufe auch noch im üblichen Rahmen von etwa 42 kPa betrieben. Dann jedoch wird ein immer weicheres, elastischeres Material der Zitzengummis verwendet und damit einhergehend ebenfalls der verwendete Anlagenvakuumdruck abgesenkt. Dieses erfolgt stufenweise, so dass sich eine Kuh an die sehr viel weicheren Materialien wie auch sehr viel geringeren Drücke während der Pulsation gewöhnen kann. Insbesondere der Strichkanal wird bei diesen stufenweise immer niedriger werdenden Drücken mehr und mehr entlastet und damit in die Lage versetzt, sich zu regenerieren. Das System weist dafür extra geeignete Übergangszitzengummis auf, bei denen beispielsweise die Shore-Härte immer niedriger gewählt wird.

Unterstützt wird die Anpassung eines geeigneten Zitzengummis durch die Auswahl einer immer weicher werdenden Zitzengummilippe. Dieses kann zum einen über eine immer dünner werdende Lippe, aber auch durch eine entsprechend immer weicher beziehungsweise elastischer werdende Materialauswahl beeinflusst werden. Vorzugsweise hat das Material der Lippe eine Dicke von weniger als 2 Millimeter, insbesondere etwa eine Dicke zwischen 1 und 1,5 Millimeter. Vorzugseise erfolgt eine Klemmung des Zitzengummis über das Schaft, während die Lippe überwiegend nur noch einen definierten Abschluß gewährleistet.

Weiterhin kann das System eine Veränderung vom Durchmesser des Schaftes für die Zitze zum Durchmesser des Kopfes für die Zitze aufweisen, um darüber ebenfalls an die sich aufgrund der Änderung der Zitze bei Neuanwendung des Systems Rechnung tragen zu können. Insbesondere ist der Schaftdurchmesser größer als der Kopfdurchmesser. Der Schaftdurchmesser beträgt dabei vorzugsweise von etwa 25 mm bis etwa 30mm. Der Kopfdurchmesser beträgt dagegen vorzugsweise von etwa 17 mm bis etwa 20 mm .

Ein weiterer Vorteil der Ausnutzung der Elastizität der eingesetzten Zitzengummis ergibt sich in der Möglichkeit, die Zitzengummis mit einer Vorspannung beim Spannen versehen zu können. Das Material erlaubt es, dass das Zitzengummi beispielsweise von einer Schaftlänge von 129 Millimeter auf 147 Millimeter beim Einsetzen gespannt werden kann, und sich trotzdem im Umfang beim Melken aufblähen läßt. Dieses erlaubt ein besonders dichtes Sitzen des Schaftmaterials an der Zitze unter gleichzeitiger Möglichkeit, ein ausreichendes "Aufblähens" bei Durchströmen von Luft entlang der Zitze im diskontinuierlichen Betrieb zu gewährleisten.

Zur Ableitung wird insbesondere der Milchleitungsbereich unmittelbar an der Zitzenöffnung gerechnet. Vorzugsweise erfolgt die Luftzuführung unmittelbar in diesen beziehungsweise zu diesem Bereich. In jedem Fall muss die Luftzuführung derart ausgestaltet werden, dass sich ein Milchstrom in umgekehrter Richtung vermieden wird. Unterstützt wird dieser Effekt durch eine Luftzuführung mittels einer Lufteintrittsöffnung des Melkzeuges, die sich in normaler Milchflußrichtung stromabwärts in unmittelbarer Nähe eines Ausgangs des Sammelstückes befindet. Bevorzugt ist die Lufteintrittsöffnung in einer Sammelleitung angeordnet, insbesondere so, dass sie in etwa mittig im Sammelleitungsquerschnitt beziehungsweise entsprechend eines gemittelten Milchdurchflussprofils in der Sammelleitung mittig angeordnet ist. Dazu kann am Sammelstückaußenumfang eine erste Öffnung angeordnet werden, die anschließend über eine durch oder am Rand des Sammelstückes geführte Leitung schließlich über eine zweite Öffnung in der Sammelleitung mündet. Vorzugsweise mündet die zweite Öffnung innerhalb von zwanzig, vorzugsweise zehn Zentimetern nach Beginn der Sammelleitung, insbesondere innerhalb von fünf Zentimetern, vorzugsweise etwa einem Zentimeter. Dadurch gelingt es, die bei periodischer Milchabfuhr aus den Zitzen auftretenden Druckschwankungen in der Sammelleitung und insbesondere auch in dem der Sammelleitung vorgeschalteten Sammelbecher zu vergleichmäßigen und den Turbulenzgrad deutlich zu senken.

Als weiteren Vorteil einer derartigen Anordnung hat sich ein Unterdrücken des Aufschäumens von Milch ergeben. Die Luftzuführung direkt in die Sammelleitung in Verbindung mit der Luftzuführungsmöglichkeit über den Zitzengummikopf führt zu einem vergleichmäßigten Strömen der Milch, die insbesondere 30 vor dem Beginn der Sammelleitung, im Sammelbecher, entlang der Wandung und im umschlossenen Raum als Flüssigkeit abfließt, ohne dass eine starke Verwirbelung mit im Sammelbecher enthaltener Luft auftritt. Das sehr starke Verringern des Aufschäumens der Milch erzielt zwei Vorteile: einerseits wird der Anteil freier Fettsäuren erheblich verringert, andererseits führt die geringe Aufschäumung und Aerosolbildung zu einer erheblichen Dichtezunahme des Milch/Luftgemisches. Dieses Gemisch hoher Dichte ist gegenüber einem Rückströmen zu träge, als dass es bis zu einer Zitze hochgerissen werden könnte.

Bei Verwendung eines Melkzeuges, welches eine Zitzenumfassung, insbesondere ein Zitzengummi, zum Ansetzen und Umfassen des Melkzeuges an die Zitze aufweist, wird bevorzugt, dass die durch die Luftzuführöffnung zugeführte Luft zumindest teilweise zwischen der Zitzenumfassung und dem Außenumfang der Zitze in Zitzenlängsrichtung geführt wird und in die Ableitung einströmt. Damit ist gewährleistet, dass der Luftstrom in und nicht entgegen der normalen Milchflussrichtung stattfindet. Insbesondere verhindert dies ein Umspülen der Zitzenhaut im Bereich der Zitzenkuppe, d.h. im Bereich der Zitzenöffnung. Das sogenannte Zitzenwaschen kann somit vermieden werden. Auch wird der Druckgradient in normaler Milchflussrichtung stabilisiert." Insbesondere werden das Vakuum am anderen Ende der Milchleitung, wohin die Milch abtransportiert wird, und die Menge der zugeführten Luft im Bereich der Zitzenöffnung aufeinander abgestimmt.

Bei einer Weiterbildung weist das Melkzeug einen Einlassbereich auf, der bei an der Zitze angesetztem Melkzeug in Zitzenlängsrichtung von der Ableitung beabstandet angeordnet ist. Durch den Einlassbereich, der insbesondere durch einen ringartig den Zitzenumfang umgebenden Hohlraum gebildet ist, wird die Luft insbesondere zwischen der beschriebenen Zitzenumfassung und dem Außenumfang der Zitze in die Ableitung geführt. Der Einlassbereich erfüllt eine Pufferfunktion, indem dort eine bestimmte Luftmenge bei geringerem Unterdruck als im Bereich der Zitzenöffnung vorhanden ist. Somit ist eine in gewissen Grenzen selbstregelnde Wirkung vorhanden. Unterliegt nämlich der Unterdruck im Bereich der Zitzenöffnung Schwankungen, dann erhöht sich das Druckgefälle zwischen dem Einlassbereich und dem Bereich der Zitzenöffnung, so dass mehr und/oder schneller Luft nachströmt. Bei Zuführung der Luft durch kleinste Zwischenräume zwischen der Zitzenumfassung und dem Außenumfang der Zitze wird der Selbstregelungseffekt noch verstärkt, da bereits die Zitzenhaut nachgiebig ist und bei größerem Druckgefälle einen größeren Strömungsquerschnitt freigibt. Besonders vorteilhaft ist es, wenn die Zitzenumhüllung aus elastischem Material mit spezifischen Elastizitätswerten gebildet ist. Dadurch wird dieser Effekt entsprechend einstellbar verstärkt. Die Elastizität ist so einstellbar, dass ein "Aufblähen" ("balloning") ermöglicht wird. Dass heißt, das Material ist in der Lage, bei Überdruck sich im Umfang zu erweitern. Dieser Überdruck tritt beim periodischen Pulsieren auf, wie er bei einem diskontinuierlichen Milchabzug mittels eines Zwei-Raum-Bechers verwendet wird. Die Elastizität ist dabei so eingestellt, dass der Umfang sich um mindestens etwa 2% bei einem Überdruck im Zitzengummi von 3kPa einstellt, beispielsweise etwa 0,5 Millimeter im Schaftdurchmesser. Als vorteilhaft haben sich Zitzengummimaterialen herausgestellt, die Silikon aufweisen, vorzugsweise ganz aus diesem Material gefertigt sind. Insbesondere ist das Material so weich, dass das Zitzengummi sich gegenüber herkömmlichen Zitzengummis leicht biegen lässt. Das verwendete Material hat daher ein Elastizizätsmodul, welches vorzugsweise eine Rißdehnung von 150% bis 300% erlaubt. Höhere Werte sind jedoch auch bevorzugt.

Insbesondere kann die Elastizität beim Zitzengummi auch entlang seiner Länge unterschiedlich sein, so dass es steife und weniger steife Bereiche gibt. Bevorzugt wird ein Abschnitt, vorzugsweise im Schaft, besonders elastisch ausgeführt, der im direkten Kontakt mit der Zitze ist. Des weiteren lässt sich die Steifheit auch über die Materialdicke einstellen. Im Bereich, der mit der Zitze in direktem Kontakt ist, hat das Zitzengummi eine Dicke vorzugsweise unterhalb von 2,5 Millimeter. Besonders gute Eigenschaften haben sich mit Zitzengummis eingestellt, die eine Materialstärke zwischen ungefähr 2 und 1 Millimeter aufwiesen. Zum einen konnte bei Auswahl eines geeigneten Materials wie Silikon eine Dehnung bei Überdruck sichergestellt, zum anderen eine ausreichende Haltbarkeit erreicht werden.

Ein weiterer Parameter, der zur Kennzeichnung eines geeigneten Materials mit herangezogen werden kann, ist die Shore-Härte. Je nach Material wird eine Shore-Härte eingestellt, wie sie beispielsweise für SBR bei etwa 47 und weniger, insbesondere bei etwa 45 vorliegt. Dieses ermöglicht, dass das Zitzengummi bei diskontinuierlichem Melkabzug Vakuumschwankungen an der Zitze zulässt.

Der Einlassbereich wird insbesondere bei wulstartigen Puffern, die wie oben beschrieben, die Zitze und den Euter gegen den Zitzenbecherrand abpuffern, durch den so definierten Hohlraum zwischen dem Wulst und der Zitze und/oder dem Euterboden definiert. Es kann aber auch ein zusätzlicher und/oder ein vergrößerter Hohlraum im Vergleich zu den bekannten Zitzengummis vorgesehen werden. In diesem so gebildeten Kopfvolumen wird vorzugsweise ein sogenanntes Kopfvakuum angelegt, dass größer als 5 kPa ist, vorzugsweise 10 kPa während des Hauptmilchflusses beträgt. Zum Ende des Melkvorganges steigt der Wert bis auf 25 kPa an, während der C- und D-Phase fällt dann der Wert annähernd bis auf den Umgebungsdruck, mit beispielsweise einer Druckdifferenz von etwa 5 kPa Unterschied zum Umgebungsdruck. Durch das System bedingt, wird damit selbst bei derartig hohen Kopfvakuumwerten eine Abschnürung und Zuschnürung an der Zitzenzisterne und damit eine Schädigung an der Zitze vermieden.

Bevorzugtermaßen weist der Einlassbereich eine die Zitze umgebende Wandung auf, in welcher die zumindest eine Luftzuführöffnung, durch die die Luft in den Einlassbereich einströmt, angeordnet ist. Die Luftzuführöffnung wird in vorteilhafter Weise zum Beispiel durch einen Hohlniet oder ähnliches als Luftdurchleitungsmittel gebildet, d.h. durch beispielsweise einen Niet, welcher eine von dem Nietmaterial umrandete Durchtrittsöffnung hat. Es können ein oder mehrere solcher Nieten und/oder andere Luftzuführöffnungen wie Schlitze oder ähnliches vorgesehen sein. Vorgesehen wird beispielsweise eine Öffnung, die einen Durchmesser zwischen 0,5 Millimeter und 2 Millimeter hat beziehungsweise eineGesamtquerschnittsöffnung zwischen 0,2 Quadratmillimeter und 3,14 Quadratmillimeter. Als zweckmäßig hat sich eine Luftzuführmöglichkeit herausgestellt, die etwa einen Volumenstrom von etwa 10 Liter/Minute ermöglicht bei einer anliegenden Druckdifferenz von 5 kPa bei einer Lufttemperatur von 20°C. Insbesondere werden bei mehreren Öffnungen diese symmetrisch um den Umfang verteilt. Der Niet selbst kann eine düsenartige Luftzuführung aufweisen, insbesondere auch als Ventil oder auch mit einem Siebmittel zum Fernhalten von unerwünschten Feststoffen ausgestattet sein. Bei Melkzeugen, die eine Mehrzahl der Ableitungen zum Ableiten der Milch jeweils einer Zitze aufweisen, wird bevorzugt, dass für jede der Ableitungen eine in gleicher Weise wirkende Luftzuführung vorgesehen ist, insbesondere mit Luftzuführöffnungen gleichen Öffnungsquerschnitts.

Außer Luftzuführöffnungen mit unveränderlichem Öffnungsquerschnitt kommen alternativ oder zusätzlich auch ventilartig wirkende Luftzuführungen in Betracht. Solche ventilartigen Luftzuführungen erfüllen bereits eine Steuerfunktion, so dass bei erhöhtem Luftzuführungsbedarf ein höherer Luftstrom auftritt. Die Ventilfunktion kann auch durch das Zusammenwirken mit der Öffnung zur Zuführung von Luft in die Sammelleitung gesteuert werden, beispielsweise mechanisch selbständig durch strömungstechnische Ausnutzung von Über- und Unterdrücken sowie sich auf- und abbauenden Rückdrücken innerhalb des Zitzengummis oder aber beispielsweise über ein elektronisches, elektrisches und/oder mechanisches Schalten unter Ausnutzung des von der Melkelektronik geschalteten Pulsationszeit an den einzelnen Zitzen. Ebenso ist aber auch die Öffnung zur Zuführung von Luft in die Sammelleitung entsprechend steuerbar, indem bei einer dort vorgesehenen Ventilfunktion die Öffnungs- uns Schließzeiten beispielsweise über die Zitzenpulsation gesteuert wird. Auch können die Ventilfunktionen so gewählt werden, dass bei unterschiedlichen Zuständen (Phasen) während eines Pulsationszyklusses die Öffnungen geschlossen beziehungsweise geöffnet sind. Beispielsweise ist es für eine nur in eine Richtung angestrebten Milchfluss äußerst vorteilhaft, wenn während einer A-Phase die Öffnungen geöffnet sind, während der C-Phase dagegen geschlossen.

Bekannt sind Melkverfahren, bei denen die Zitze durch ein Steuerelement verengt oder gegen Milchdurchtritt verschlossen werden kann, wobei das Steuerelement im Bereich der Längserstreckung, meist in der Nähe des Euterbodens, angeordnet ist. Damit soll vermieden werden, dass sich beim Schließen des Steuerelements, also beim Verringern oder Unterbrechen des Milchstromes, der Unterdruck an der Zitzenöffnung plötzlich ändert und somit der Druckgradient stabil in normale Milchflussrichtung bleibt. Nachteilig dabei ist jedoch, dass die Zitze in ihrer Längserstreckung einschnürungsartig verengt wird und sich daher Blut und Gewebeflüssigkeit im Bereich zwischen der Verengung und der Zitzenöffnung staut.

Insbesondere bei diesem Verfahren ist es nicht möglich gewesen, den Bereich der Ableitung an der Zitzenöffnung zu belüften. Vor allem bei verengter Zitze konnten selbst geringste Luftmengen nicht zwischen Zitzenhaut und Steuerelement hindurchströmen. Durch das vorgeschlagene System jedoch wird eine Hindurchführung von Luft entlang der Zitzenhaut in den Sammelbecher gezielt angestrebt.

Bei einer Weiterbildung der Erfindung wird während des Milchstromes oder auch während der Unterbrechung des Milchstromes Luft in die Ableitung zugeführt. Dies geschieht insbesondere durch den Zwischenraum zwischen einer Zitzenumfassung und der Zitzenhaut. Bei dem zuvor beschriebenen Verfahren mit Verengung der Zitze wird vorzugsweise extra eine Durchtrittsöffnung oder/und Aussparung an dem Steuerelement vorgesehen. Bei dem weit verbreiteten Verfahren mit ventilartigem Steuerelement unterhalb der Zitzenöffnung, also ohne einschnürungsartige Verengung der Zitze längs ihrer Erstreckung, können auch derartige Durchtrittsöffnungen und/oder Aussparungen vorgesehen sein. Bevorzugt wird jedoch in diesem Fall, dass die Luft zumindest teilweise einfach durch kleinste Zwischenräume zwischen einer großflächig an der Zitzenhaut anliegenden Zitzenumfassung und der Oberfläche der Zitzenhaut zugeführt wird. Insbesondere erlaubt bereits die Oberflächenstruktur der Zitzenhaut eine derartige Zuführung, jedenfalls dann, wenn die Zitzenumfassung wie im vorliegenden Fall großflächig und daher nicht zu stark gegen die Zitzenhaut presst.

Neben dem bereits offenbarten Inhalt der Erfindung wird zur Lösung der Aufgabe weiterhin das folgende Verfahren gemäß Anspruch 11 vorgeschlagen:
Beschrieben wird dabei die Verwendung eines Melkzeuges, das
- eine Mehrzahl von Ableitungen zum Ableiten der Milch von einem oder mehreren zu melkenden Tieren,
- ein Sammelelement zum Sammeln der Milch aus den Ableitungen in einem Sammelhohlraum und
- eine Sammelleitung zum Ableiten der gesammelten Milch aus dem Sammelhohlraum
aufweist, wobei die Leitungshohlräume der Ableitungen und der Sammelleitung sowie der Sammelhohlraum zum Ableiten der Milch zumindest zeitweise ein Druckgefälle bilden und gegenüber ihrer Umgebung Unterdruck aufweisen, wird vorgeschlagen, dass unmittelbar in einen Hohlraumbereich, in dem gesammelte Milch abströmt, aus der Umgebung Luft zugeführt wird.

Dieses Verfahren kann in einer vorteilhaften Weiterbildung mit dem zuerst geschilderten Vorschlag zu einer Weiterbildung verbunden werden, die eine äußerst effektive Vermeidung von Rückströmungen von Milch während des Melkvorganges vermeidet.

Dies führt jedoch zu Verwirbelungen in dem Sammelstück und zu einer ungleichmäßigen Belüftung nicht nur des Sammelstücks, sondern auch der in das Sammelstück mündenden Ableitungen. Die Folge sind Umkehrungen des Druckgradienten in der oder den Ableitungen, so dass es zu einem umgekehrten Milchfluss in Richtung Zitze kommen kann.

Bei einer besonders bevorzugten Ausgestaltung wird das Belüftungsloch des bekannten Sammelstücks mit einer Luftleitung verbunden, so dass die durch das Belüftungsloch hindurchtretende Umgebungsluft unmittelbar in den Hohlraumbereich geführt wird, in den gesammelte Milch strömt. Der Ort, wo die zugeführte Luft aus der Luftleitung austritt, kann insbesondere noch in dem Sammelelement liegen oder bereits in der Sammelleitung. Bereits diese Maßnahme schließt Verwirbelungen weitgehend aus. Dieses schon oben beschriebene verminderte Aufschäumen führt dazu, dass eine Trennung von in der Milch enthaltenen Fettsäure vermieden wird. Die gesammelte Milch verbleibt direkt nach dem Austritt aus der Zitze und Überströmen in das Sammelstück in einem dispersiven Zustand, so dass bei der späteren Butterproduktion keinerlei Probleme wegen Entmischungseffekten aus der Milchdispersion auftreten.

Wie Messungen des Druckgradienten in den Ableitungen zwischen den Zitzen und dem Sammelelement eines derartig belüfteten Melkzeuges ergeben haben, kann durch diese Belüftungsart die Umkehrung des Druckgradienten in den Ableitungen zumindest weitgehend vermieden werden.

Bevorzugtermaßen wird die Luft derart in den Hohlraumbereich geführt, dass sie in Strömungsrichtung der gesammelten Milch in den Hohlraumbereich einströmt, insbesondere durch den Luftaustritt der Luftleitung.

Dadurch wird vermieden, dass Luft in die an dem Sammelelement mündenden Ableitungen strömt und dass der Druckgradient dort negativ beeinflusst wird.

Um das Problem des umgekehrten Milchflusses nahezu vollständig auszuschließen, ist es zweckmäßig, eine Belüftung durch Zuführen von Luft unmittelbar in den Hohlraumbereich, in den gesammelte Milch abströmt, mit einer Luftzuführung im Bereich der Zitzenöffnung in die Ableitung zu kombinieren. Bei einer solchen Ausgestaltung wird die Luftzuführung beim Betrieb des Melkzeuges in besonders vorteilhafter Weise über verschiedene Bereiche des Melkzeuges verteilt. Einerseits findet bereits im Bereich der Zitzenöffnung eine Luftzuführung statt, die die Kompensation von Druckwechseln im Bereich der Zitzenöffnung gewährleistet und andererseits wird die Ursache für das Eintreten von Luft aus dem Sammelelement in die Ableitungen bzw. die Umkehrung des Druckgradienten in den Ableitungen eliminiert.

Eine Kontrollmöglichkeit, ob beispielsweise der Anlagendruck günstig eingestellt ist und eine Umkehrung der Strömung vermieden wird, ergibt sich, wenn das Sammelstück aus durchsichtigem Kunststoff hergestellt wird, beispielsweise in Spritzgusstechnik. Letzteres erlaubt es auch, daß die Luftleitung im Sammelstück integriert gefertigt ist. Eine weitere Möglichkeit besteht darin, die Luftleitung als zusätzliches Bauteil im Sammelstück vorzusehen. Eine weitere Kontrollmöglichkeit des Milchflusses ergibt sich, wenn zumindest einzelne Bauteile vorzugsweise am Zitzengummi oder in seiner unmittelbaren Nähe oder das Zitzengummis selbst transparent gestaltet sind. Vorzugsweise kann dieses bei einem geteilten System der kurze Milchschlauch sein, der zum Sammelstück führt. Ebenfalls vorteilhaft ist die durchsichtige Gestaltung des Pulsschlauches. Die Durchsichtigkeit erlaubt festzustellen, wie sich wo der Milchfluß verhält.

Ein Ausführungsbeispiel der vorliegenden Erfindung wird nun anhand der Zeichnung näher erläutert. Die Erfindung ist jedoch nicht auf dieses Ausführungsbeispiel beschränkt. Die Zeichnung zeigt:

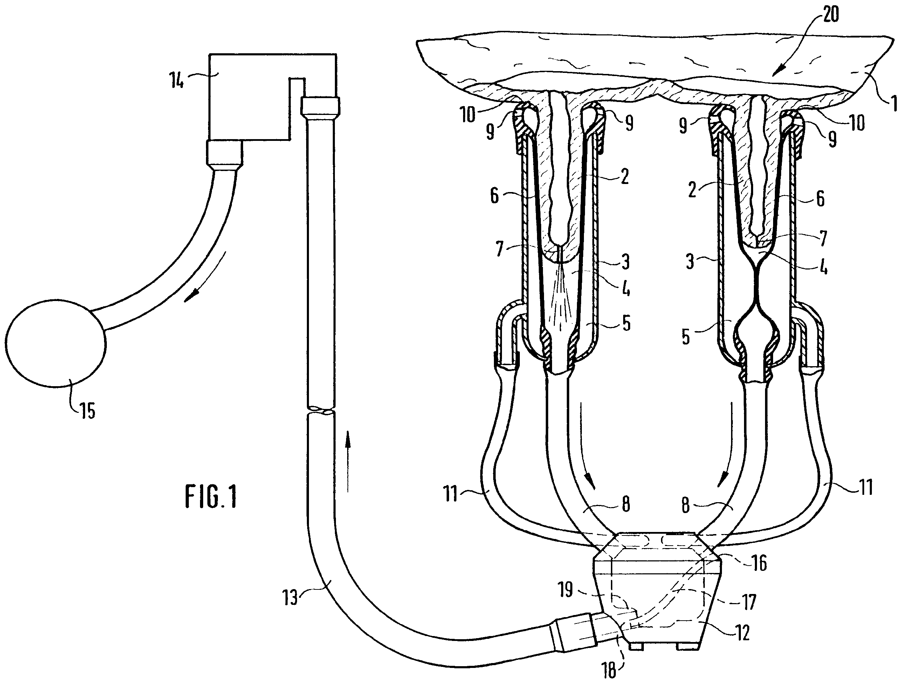

- Fig.1: Ein Melkzeug für eine nach dem zyklischen Melkprinzip arbeitenden Melkanlage,
- Fig.2: ein für das "Balooning" besonders angepasstes Zitzengummi,
- Figur 3, 4 und 5: jeweils ein Diagramm, aus dem gemessene Druckwerte an unterschiedlichen Messorten einer Melkanlage nach Fig. 1 zu unterschiedlichen Melkzuständen hervorgehen.

Von einem Kuheuter 1 nach unten abstehend sind zwei Zitzen 2 dargestellt. Über die Zitzen 2 gestülpt ist jeweils ein Melkbecher **3.** Die Melkbecher 3 sind Zweiraum-Melkbecher mit einem inneren Teilraum 4 und einem äußeren Teilraum **5.** Die Zitzen 2 werden zur Aufnahme in Zitzeneinlassöffnungen 20 eingeführt. Die Teilräume 4, 5 werden jeweils durch ein einstückiges Zitzengummi 6 unterteilt. Im Bereich unterhalb der Zitzenöffnung 7 der Zitze 2 befindet sich jeweils als Steuermittel ein ventilartiger Bereich der Zitzengummis 6, der eine Unterbrechung des Milchflusses durch die Zitzenöffnung 7 ermöglicht, indem er den Bereich des inneren Teilraums 4 unmittelbar unterhalb von der Zitzenöffnung 7 gegen die unter Unterdruck stehende Milchleitung 8 absperrt. Der Teil des inneren Teilraums 4 unterhalb der Zitzenöffnung 7 wird als Ableitung im engeren Sinne bezeichnet, in den eine Luftzuführung über Luftzuführöffnungen 9 im Zitzengummikopf 10 und durch den Zwischenraum zwischen der durch das Zitzengummi 6 gebildete Umhüllung der Zitze und der Zitzenhaut in die Ableitung hinein erfolgt.
Der äußere Teilraum 5 ist jeweils über eine Steuerleitung 11 evakuierbar, wobei die Steuerleitung 11 mit einer nicht dargestellten Vakuumpumpe verbunden ist. Die Zitzengummis 6 der beiden dargestellten Melkbecher 3 werden gegenzyklisch geöffnet und geschlossen. Das Zitzengummi 6 des rechten Melkbechers 3 befindet sich in der Schließphase, d.h. der Entlastungsphase. Das Zitzengummi 6 des linken Melkbechers 3 befindet sich dagegen in der Öffnungsphase, d.h. Saugphase. Während der Entlastungsphase wird Blut und/oder Gewebeflüssigkeit entgegen der Milchflussrichtung in der Zitze 2 zurückmassiert. Währenddessen ist die Zitzenöffnung 7 aufgrund der Verengung des inneren Teilraums 4 geschlossen. Das Zitzengummi 6 presst das Blut und/oder die Gewebeflüssigkeit aufgrund der Verengung zurück, wobei sich der innere Teilraum nach oben erweitert.

Über die Milchleitungen 8 wird die Milch in ein Sammelstück 12 geführt, in das insgesamt vier Milchleitungen 8 münden, d.h. alle vier Milchleitungen 8 von den Zitzen des Kuheuters 1. Die Milch aus den unterschiedlichen Milchleitungen 8 sammelt sich im unteren Bereich des Sammelstücks 12 und wird durch die Sammelleitung 13 über einen Indikator 14 zu einem Behälter 15 geleitet, wo eine Vakuumpumpe für den entsprechenden Unterdruck angeschlossen ist. Das Sammelstück weist ein in konventioneller Weise angeordnetes Luftloch 16 auf. Das Luftloch 16 ist mit einer Luftleitung 17 verbunden, welche im Anschlussbereich 18 der Sammelleitung 13 über die Luftaustrittsöffnung 19 in das Sammelstück 12 mündet. Im übrigen gestatten das Luftloch 16 wie auch die Luftzuführöffnung 9 in einer Weiterbildung, dass ein anderes Medium zusätzlich beigefügt wird, beispielsweise eine Flüssigkeit versprüht als Tröpfchenform, die einen Einfluß auf die Milch hat, beispielsweise enzymatische Reaktionen zur verbesserten Haltbarkeit bewirkt. Des weiteren besteht die Möglichkeit, auf diese Weise ein Desinfektionsmittel für die Zitze 2 zuzuführen.

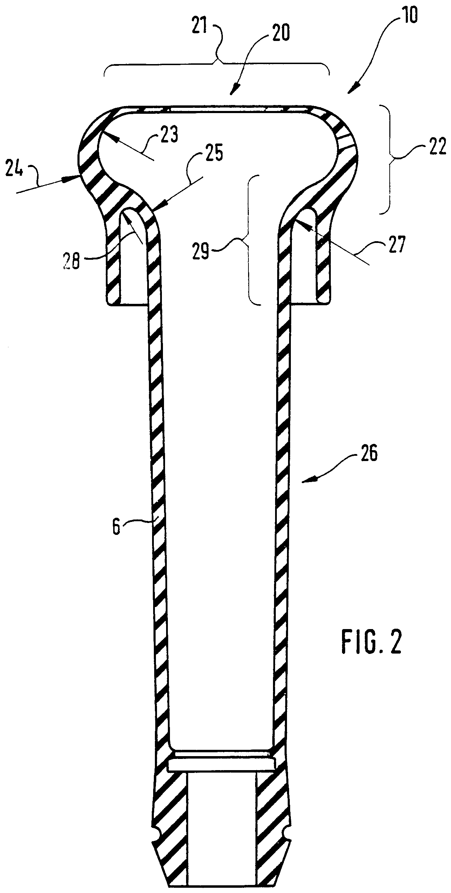

Figur 2 zeigt ein für ein "Balooning" besonders gut angepasstes Zitzengummi 6. Dieses Zitzengummi 6 hat eine SBR/NBR-Mischung mit einer Shore-Härte von 45 und weniger. Desweiteren ist der Bereich des Zitzengummikopfes 10 besonders angepasst, um auch unterschiedlich dicke Zitzen mit nur einem Zitzengummi 6 versorgen zu können. Dazu weist ein Lippenbereich 21 eine Materialdicke von etwa 0,5 Millimeter bis etwa 1,5 Millimeter auf, die vorzugsweise von innen nach außen langsam anwächst. Ein sich daran anschließender Bogen 22 weist ebenfalls eine geringe Materialdicke auf. Diese Diese wird beispielsweise dadurch erreicht, dass ein erster Innenradius 23 des Bogens 22 etwa zwischen einem Viertel und einem Fünftel kleiner ist **15** als ein erster Außenradius 24 des Bogens 22. An den ersten Innenradius 23 schließt sich vorzugsweise direkt ein zweiter Innenradius 25 an, der eine Krümmung vom Zitzengummikopf 10 in einen Schaft 26 des Zitzengummis 6 definiert. Dem zweiten Innenradius 25 gegenüberliegend ist ein zweiter Außenradius 27, der etwa ein Viertel bis ein Fünftel kleiner ist als der zweite Innenradius 25. Der erste Innenradius 23 beträgt bevorzugt zwischen 7,2 und 8,3 Millimeter, insbesondere zwischen 7,6 und 7,9 Millimeter. Der zweite Innenradius 25 beträgt vorzugsweise zwischen 12,2 und 13,6 Millimeter, vorzugsweise zwischen 12,6 und 13,2 Millimeter. Des weiteren wird eine hohe Eigenelastizizät der Form des Zitzengummikopfes 10 dadurch verwirklicht, dass sich an den zweiten Außenradius 27 ein dritter Außenradius 28 anschließt, der um den Faktor Drei bis Vier kleiner ist als der zweite Außenradius 27. Damit erhält der Zitzengummikopf 10 an seiner dicksten Stelle eine Materialstärke von 8 Millimeter im Bereich eines anstoßenden Melkbecherrandes. Zusätzlich wird die Elastizität des Materials und der Form dadurch ausgenutzt, dass der für einen einzusetzenden Melkbecherrand notwendige Durchmesser geringer ist als der Melkbecherrand selbst. Dadurch wird das Zitzengummi 6 beim Aufsetzen in einem Oberbereich 29 des Ü-berganges zwischen Zitzengummikopf 10 und Schaft 26 aufgeweitet. Da wiederum die Zitzeneinlassöffnung 21 nur einen Durchmesser zwischen 24 Millimeter und 17 Millimeter, vorzugsweise etwa 20 Millimeter hat, andererseits das verwendete Material sehr elastisch ist, wird bei einer dickeren Zitze von beispielsweise 35 Millimeter Durchmesser der Lippenbereich 21 nach innen eingebogen und geweitet mit Unterstützung einer elastischen Bewegung im Bogen 22. Das bewirkt, dass auch bei derartig großen Zitzendurchmessern ein Einschnüren und Schädigen der Zitze verhindert und trotzdem ein ausreichender Halt über den Schaft zur Verfügung gestellt wird.

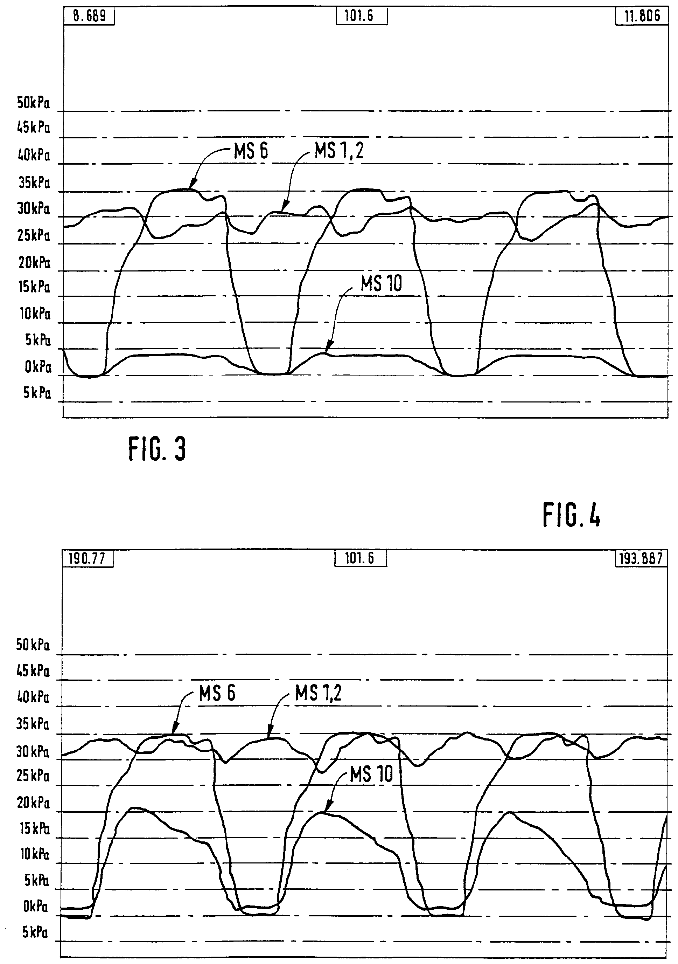

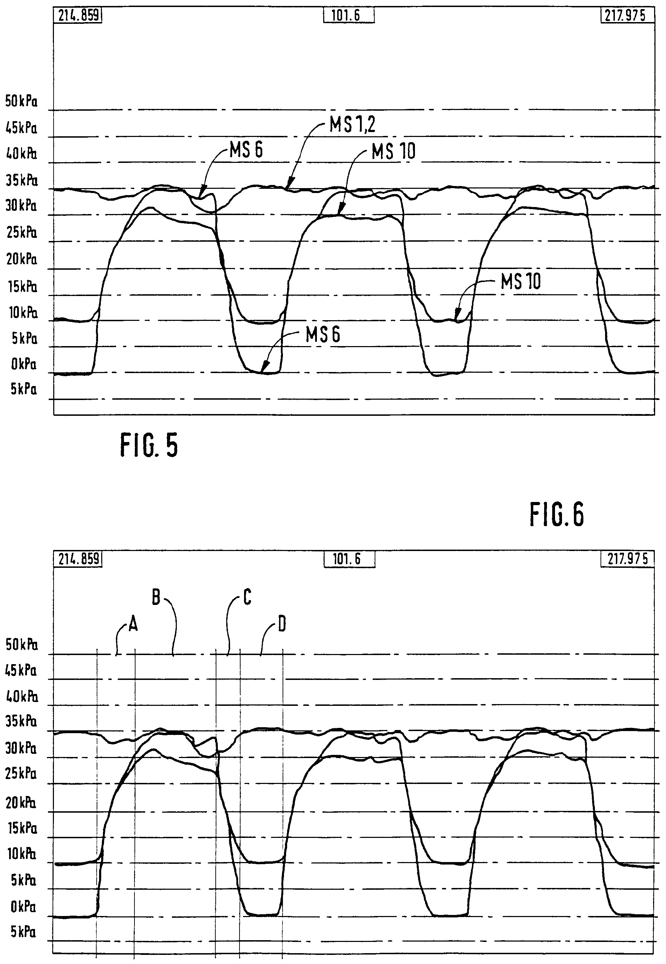

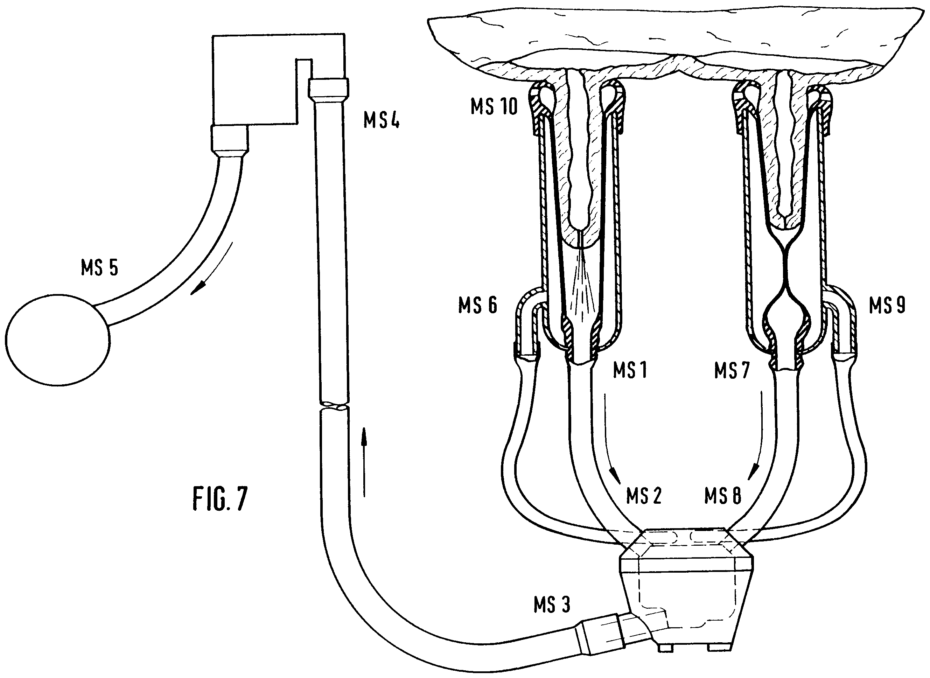

Die nachfolgenden Figuren 3, 4, 5 und 6 zeigen unterschiedlich gemessene Drücke, die mit einem Verfahren und einer Vorrichtung gemäß der Erfindung an unterschiedlichen Messstellen gemessen worden sind. Dazu wurde ein Zitzengummi mit einer zusätzlichen Öffnung im Zitzengummi verwendet, während das Sammelstück keine Luftzuführöffnung aufwies. Das Melkanlagenvakuum in der Milchleitung betrug 36,7 kPa. Der Umgebungsdruck betrug 101,6 kPa. Auf der X-Achse ist der Zeitraum der Messung eingetragen. In Figur 3 lief die Messung im Sekundenbereich von 8,689 Sekunden bis 11,806 Sekunden der Melkung, in Figur 4 von 190,77 bis 193,887 Sekunden und in Figur 5 von 214,859 bis 217,975 Sekunden. Figur 6 zeigt die Aufspaltung eines Messzyklus in die unterschiedlichen Phasen A, B, C und D anhand des Messzyklus aus Figur 5. Auf der Y-Achse sind die gemessenen Druckwerte in Relation zum Umgebungsdruck in kPa angegeben. Negative Druckwerte kennzeichnen einen Überdruck an der Messstelle. Die Messstellen aus den Figuren 3, 4 ,5 und 6 gehen aus Figur 7 hervor. Figur 3 zeigt Pulszyklen mit Phasen A, B, C, D während eines Hauptmilchflusses. Figur 4 zeigt Pulszyklen kurz vor Ende eines Melkvorganges und Figur 5 zeigt Pulszyklen am Ende des Melkvorganges. Die gezeigten Graphen sind in ihrer und Ausprägung wie auch Zeitdauer charakteristisch für die Erfindung, wobei die gemessenen Druckwerte zueinander an der Melkanlage zu einem gewissen Zeitpunkt eine Aussage ermöglichen über die Flussrichtung der Milch wie aber auch das Verhalten des Zitzengummis. Die Höhe der gemessenen Druckwerte ist abhängig vom eingestellten Melkanlagenvakuum. Die Ausprägung der Druckverläufe zueinander bleibt vorzugsweise jedoch annähernd gleich beziehungsweise vergleichbar. Besonders charakteristisch ist der Druckabfall und Druckanstieg an der Messstelle 10, der in Figur 5 erhöht, davor jedoch insbesondere während der Hauptmelkzeit sehr niedrig ist, insbesondere auch in seiner Schwankung.

Bei diskontinuierlichem Milchabzug werden die einzelnen Phasenabschnitte A, B, C, D eines Zyklusses etwa die folgende Aufteilung haben: A= etwa 17 bis etwa 21%, B= etwa 41% bis etwa 47%, C= etwa 10% bis etwa 15% und D= etwa 20% bis etwa 26%. Die A-Phase eines Zyklusses dauert etwa 180 bis 250 Millisekunden. Vorzugsweise wird eine Saugphase (A und B zusammen) im Verhältnis zu einer Entlastungsphase (C und D zusammen) von in etwa 60:40 eingestellt. Dabei werden Druckschwankungen im Zitzengummi gemessen, die bei dem vorgeschlagenen System als Differenz um etwa 20 kPa und aufwärts betragen, bei herkömmlichen Systemen jedoch etwa bei 43 kPa liegen. Die dadurch oben festgestellte Änderung des Volumens im Zitzengummi führt dazu, dass bei einem mittleren Schaftdurchmesser von etwa 24 Millimeter, einer Öffnungszeit von etwa 200 Millisekunden und einer etwa zu berücksichtigenden Höhe des Schaftes von etwa 80 Millimeter sich ein Volumenstrom von 10,8 Liter/Minute je Zitzengummi ergibt. Diese Volumenänderung gleicht das vorgeschlagene System so aus, dass der durch die Volumenänderung notwendige Druckausgleich gezielt nur in eine Richtung überwiegend - vom Zitzengummikopf zum Sammelstück - erfolgen kann, denn das System erlaubt auch den Ausgleich der von den jeweiligen Zitzengummis ins Sammelstück resultierenden unterschiedlichen Drücke und damit Druckdifferenzen, so dass im Sammelstück ein in etwa vergleichmäßigter Druck herrscht. Selbst unterstellt, dass bei Falschansetzung eines herkömmlichen Melkbechers mit einem herkömmlichen Zitzengummi ein Fehlluftstrom entlang der Zitze möglich wäre, so wäre dieser nicht in der Lage, eine überwiegende Strömungsrichtung von Luft im Sammelstück zum Volumenausgleich zu gewährleisten, die eine Strömungsumkehrung der in das Sammelstück von den einzelnen Zitzen fließenden Milch vermeidet. Unterstellt man eine Fehlluftströmung von etwa 5 Liter/Minute, so muss trotzdem die Öffnung am Zitzengummikopf vorhanden und so ausgelegt sein, dass sie bei einem mittleren Melkvakuum der Anlage von beispielsweise 38 kPa immerhin noch 6 Liter/Minute Luftströmung ermöglicht. Für das Sammelstück bedeutet das wiederum, dass es einen Volumenstromausgleich von 24 Liter/Minute bei Gleichtaktmelkung und etwa 12 Liter/Minute bei Wechseltaktmelkung ausgleichen muss. Bei einem mittleren Melkvakuum von 38 kPa, einem Luftdruck von 101,3 kPa und einer Temperatur von 37°C ergibt das eine Strömungsgeschwindigkeit von 16,64 Meter/Sekunde, wenn ein Druck von nur 0,1 kPa gegen die Strömungsrichtung der Milch wirkt. Geht man wiederum von einem Milchfluss von 2 Liter/Minute aus, einem Pulsverhältnis Saugen zu Entlasten in Höhe von 50:50 sowie einem durchschnittlichen Strichkanal-Durchmesser von 1,5 Millimeter, ergibt sich eine Milchausflussgeschwindigkeit aus der Zitze von etwa 9,4 Meter/Sekunde. Bei der durch das System sichergestellten gezielten Gleichströmung wird die Umkehrung des Milchstromes von einer Zitze zur nächsten und damit das unerwünschte "Respraying" vermieden.
Vorzugsweise wird die Anlage für das Zitzengummi beziehungsweise das Sammelstück tief verlegt. Auch lassen sich diese Bauteile bei Rohrmelkanlagen nachträglich einbauen und bei zu planenden Neubauten wie beispielsweise Karussellmelkanlagen entsprechend vorsehen. Ein weiterer Vorteil der Erfindung ist die mögliche Absenkung der benötigten Pumpenleistung. Beispielsweise kann bei Zugrundelegung eines konstanten Volumenstromes mit der nicht benötigten Mehrleistung der Reserveluftdurchlaß erhöht werden oder aber über eine entsprechende Steuerung oder Regelung der benötigte Druck eingestellt werden unter Einsparung der ansonsten notwendigen höheren Energieleistung der Pumpe. Auch ermöglicht die Erfindung, Pumpen in einem Bereich zwischen 2,2 und 7,5 Kilowatt und mehr mit einem Durchsatz von beispielsweise 2800 Liter Luft/Minute mit einer Drehzahlregelung einzusetzen, wobei bei der Auslegung der Pumpe für die Melkanlage eine um etwa 10% und mehr geringere Leistung gegenüber herkömmlichen Systemen benötigt wird. Gegebenenfalls ist es möglich, schon bestehende Pumpenanlagen entsprechend anzupassen, beispielsweise durch nachträglichen Einbau eines Frequenzumrichters und geeigneter Meßfühler, um vorzugsweise eine Drehzahlregelung auf das niedriger benötigte Anlagenvakuum zu ermöglichen. Andere Pumpenregelungen sind jedoch ebenfalls einsetzbar.

### Bezugszeichenliste

- 1: Kuheuter
- 2: Zitze
- 3: Melkbecher
- 4: innerer Teilraum
- 5: äußerer Teilraum
- 6: Zitzengummi
- 7: Zitzenöffnung
- 8: Milchleitung
- 9: Luftzuführöffnungen
- 10: Zitzengummikopf
- 11: Steuerleitung
- 12: Sammelstück
- 13: Sammelleitung
- 14: Indikator
- 15: Behälter
- 16: Luftloch
- 17: Luftleitung
- 18: Anschlußbereich
- 19: Luftaustrittsöffnung
- 20: Zitzeneinlassöffnung
- 21: Lippenbereich
- 22: Bogen
- 23: erster Innenradius
- 24: erster Außenradius
- 25: zweiter Innenradius
- 26: Schaft
- 27: zweiter Außenradius
- 28: dritter Außenradius
- 29: Oberbereich
- MS 1 - 10: Messtellen an der Melkanlage

## Patentansprüche

1. Melkanlage mit einem Zitzengummi (6) mit einem Zitzengummikopf (10), der eine Zitzeneinlassöffnung (20) hat, und mit einer Auslassöffnung, die über einen Schaft der Zitzeneinlassöffnung (20) gegenüber angeordnet ist, wobei zumindest in unmittelbarer Nähe zum Zitzengummikopf (10) das Zitzengummi (6) zumindest eine weitere Öffnung zum Durchfluss eines Fluides hat, **dadurch gekennzeichnet, dass** ein Melkvakuummittelwert zumindest in einem Bereich zwischen etwa 20 kPa und etwa 45 kPa variabel einstellbar ist.

2. Melkanlage nach Anspruch 1, **dadurch gekennzeichnet, dass** die weitere Öffnung eine Lufteinlassaussparung an einer Lippe des Zitzengummikopfes (10) und/oder eine Luftzufuhröffnung (9) seitlich am Zitzengummikopf (10) ist.

3. Melkanlage nach Anspruch 1 oder 2, **dadurch gekennzeichnet, dass** zumindest ein Teil eines an das Zitzengummi (6) anschließbaren Schlauchsystems transparent ist.

4. Melkanlage nach einem der vorhergehenden Ansprüche, **dadurch gekennzeichnet, dass** sie zumindest einen Melkbecher (3) und mindestens ein erstes und ein zweites Zitzengummi (6) für eine Zitze (2) aufweist, wobei das erste Zitzengummi eine geringere Elastizität hat als das zweite Zitzengummi, wobei das erste Zitzengummi für eine erste Anwendungsperiode an der Zitze bestimmt ist und das zweite Zitzengummi für eine nachfolgende Anwendungsperiode an der gleichen Zitze (2) bestimmt ist.

5. Melkanlage nach einem der vorhergehenden Ansprüche, aufweisend ein Sammelstück (12) mit einem Luftloch (16) und mit einer Luftaustrittsöffnung (19), die mit dem Luftloch (16) in Verbindung steht, **dadurch gekennzeichnet, dass** die Luftaustrittsöffnung (19) in einem Hohlraumbereich (18), der zumindest unmittelbar benachbart zu einer insbesondere anschließbaren Sammelleitung (13) ist, in das Sammelstück (12) mündet.

6. Melkanlage nach Anspruch 5, **dadurch gekennzeichnet, dass** das luftloch (16) in die Sammelleitung (13) mündet.

7. Verfahren zum Melken von Tieren, insbesondere von Milchkühen, mit einer Melkanlage nach Anspruch 1, wobei ein Melkzeug verwendet wird, das eine Ableitung zum Ableiten der Milch von einer Zitze (2) eines Tieres und ein Steuermittel zur Steuerung des Milchstroms aus der Zitze (2) in die Ableitung aufweist, wobei das Steuermittel wiederkehrend, insbesondere zyklisch, den durch Unterdruck in der Ableitung bewirkten Milchstrom durch die Zitzenöffnung (7) unterbricht, wobei während des Melkvorganges durch zumindest eine Luftzufuhröffnung (9) Luft in die Ableitung zugeführt wird, **dadurch gekennzeichnet, dass** zu einem Ende des Melkvorganges ein Kopfvakuumwert ansteigt, während er in einer C- und D-Phase annähernd auf den Umgebungsdruck abfällt.

8. Verfahren nach Anspruch 7, wobei das Melkzeug weiterhin eine Zitzenumfassung (6) zum Ansetzen des Melkzeuges an die Zitze (2) und zum Umfassen der Zitze (2) aufweist, **dadurch gekennzeichnet, dass** die durch die Luftzufuhröffnung (9) zugeführte Luft zumindest teilweise zwischen der Zitzenumfassung (6) und dem Außenumfang der Zitze (2) in Zitzenlängsrichtung geführt wird und in die Ableitung einströmt.

9. Verfahren nach einem der Ansprüche 7 und 8, wobei das Melkzeug einen Einlassbereich aufweist, der bei an der Zitze (2) angesetztem Melkzeug in Zitzenlängsrichtung von der Ableitung beabstandet angeordnet ist, **dadurch gekennzeichnet, dass** die Luft in den Einlassbereich über eine Luftzufuhröffnung (9) entlang der Zitze geführt wird, wobei die Luftzufuhröffnung (9) in einer die Zitze (2) umgegebenen Wandung angeordnet ist.

10. Verfahren nach einem der Ansprüche 7 bis 9, **dadurch gekennzeichnet, dass** auch während der Unterbrechung des Milchstromes Luft, insbesondere gemäß Anspruch 2 durch den Zwischenraum zwischen der Zitzenumfassung (6) und dem Außenumfang der Zitze (2), in die Ableitung zugeführt wird.

11. Verfahren zum Melken von Tieren, insbesondere von Milchkühen, mit einer Melkanlage nach Anspruch 1, wobei ein Melkzeug verwendet wird, das
- eine Mehrzahl von Ableitungen (8) zum Ableiten der Milch von einem oder mehreren zu melkenden Tieren,
- ein Sammelelement (12) zum Sammeln der Milch aus den Ableitungen (8) in einem Sammelhohlraum und
- eine Sammelleitung (13) zum Ableiten der gesammelten Milch aus dem Sammelhohlraum aufweist, wobei die Leitungshohlräume der Ableitungen (8) und der Sammelleitung (13) sowie der Sammelhohlraum zum Ableiten der Milch zumindest zeitweise ein Druckgefälle bilden und gegenüber ihrer Umgebung Unterdruck aufweisen, wobei unmittelbar in einen Hohlraumbereich (18), in den gesammelte Milch abströmt, aus der Umgebung Luft zugeführt wird, **dadurch gekennzeichnet, dass** die Luft derart in den Hohlraumbereich (18) geführt wird, dass sie in Strömungsrichtung der gesammelten Milch in den Hohlraumbereich (18) einströmt.

12. Verfahren nach Anspruch 11, **dadurch gekennzeichnet, dass** die Luft aus der Umgebung durch einen Lufteintritt (16) in eine Luftleitung (17) geführt wird und über einen Luftaustritt (19) der Luftleitung (17) in dem Hohlraumbereich (18) ausströmt.

13. Verfahren nach Anspruch 11 oder 12, **dadurch gekennzeichnet, dass** dieses mit einem Verfahren nach Anspruch 7 gemeinsam eingesetzt wird.

## Claims

1. Milking system with a teatcup liner (6) with a teatcup liner head (10), that has a teat admission (20), and with an outlet opening, that is arranged opposite to the teat admission (20) via a shaft, wherein at least in direct proximity to the teatcup liner head (10) the teatcup liner (6) has at least one further opening for the flow of a fluid, **characterized in that** a mean value of the milking vacuum is at least in a range between about 20 kPa and about 45 kPa variably adjustable.

2. Milking system according to claim 1, **characterized in that** the further opening is an air inlet recess on a lip of the teatcup liner head (10) and/or an air supply opening (9) lateral on the teatcup liner head (10).

3. Milking system according to claim 1 or 2, **characterized in that** at least a part of a hose system connectable to the teatcup liner (6) is transparent.

4. Milking system according to one of the preceding claims, **characterized in that** it has at least one teatcup (3) and at least a first and a second teatcup liner (6) for a teat (2), wherein the first teatcup liner has a lower elasticity than the second teatcup liner, wherein the first teatcup liner is intended for a first application period at the teat, and the second teatcup liner is intended for a subsequent application period at the same teat (2).

5. Milking system according to one of the preceding claims, having a collecting element (12) with an air hole (16) and with an air outlet aperture (19), that is in communication with the air hole (16), **characterized in that** the air outlet aperture (19) in a cavity region (18), that is at least in direct proximity to an especially connectable collecting pipe (13), ends in the collecting element (12).

6. Milking system according to claim 5, **characterized in that** the air hole (16) ends in the collecting pipe (13).

7. Method for milking animals, especially of milk cows, with a milking system according to claim 1, wherein a milking cluster is used, that has a discharge for discharging milk from a teat (2) of an animal, and a control means for controlling the milk flow from the teat (2) into the discharge, wherein the control means intermittently, in particular cyclically, interrupts the milk flow through the teat opening (7) caused by negative pressure in the discharge, wherein during the milking process through at least one air supply opening (9) air is supplied to the discharge, **characterized in that** at one end of the milking process a value of the head vacuum increases, while during a C- or D-phase it drops down to approximately ambient pressure.

8. Method according to claim 7, wherein the cluster furthermore has a teat surround (6) for attaching the cluster to the teat (2) and for encircling the teat (2), **characterized in that** the air supplied by the air supply opening (9) is at least partially guided between the teat surround (6) and the outer circumference of the teat (2) in longitudinal direction of the teat and flows into the discharge.

9. Method according to one of the claims 7 and 8, wherein the cluster has an inlet region, that is arranged in longitudinal direction of the teat (2) when the cluster is attached, and spaced apart from the discharge, **characterized in that** the air is guided into the supply area via an air supply opening (9) along the teat, wherein the air supply opening (9) is arranged in a wall that surrounds the teat (2).

10. Method according to one of the claims 7 to 9, **characterized in that** also during the interruption of the milk flow, especially according claim 2, air is supplied through the spacing between the teat surround (6) and the outer circumference of the teat (2) into the discharge.

11. Method for milking animals, especially of milk cows, with a milking system according to claim 1, wherein a cluster is used that has
- a plurality of discharges (8) for discharging milk from one or more animals to be milked,
- a collecting element (12) for collecting the milk from the discharges (8) in a collecting cavity, and
- a collecting line (13) for discharging the collected milk from the collecting cavity, wherein the conduit cavities of the discharges (8) and the collecting line (13) and the collecting cavity for discharging the milk at least temporarily form a pressure gradient and have negative pressure with respect to their environment,
**characterized in that** air is supplied from the environment directly into the cavity region (18), into which the collected milk flows, **characterized in that** the air is guided into the cavity region (18) in such a way that it flows into the cavity region (18) in the direction of the collected milk.

12. Method according to claim 11, **characterized in that** the air from the environment is guided through an air inlet (16) into an air line (17) and escapes via an air outlet (19) of air line (17) in the cavity region (18).

13. Method according to claim 11 or 12, **characterized in that** said is applied together with an method according to claim 7.

## Revendications

1. Installation de traite comprenant un manchon trayeur (6) comprenant une tête de manchon trayeur (10) qui possède une ouverture d'entrée (20) pour le trayon, et une ouverture de sortie qui est disposée, par l'intermédiaire d'un arbre, face à l'ouverture d'entrée (20) pour le trayon, dans laquelle, au moins à proximité immédiate de la tête de manchon trayeur (10), le manchon trayeur (6) possède au moins une ouverture supplémentaire pour le passage d'un fluide, **caractérisée en ce qu'**une valeur moyenne de dépression de traite est réglable de manière variable au moins dans une plage entre environ 20 kPa et environ 45 kPa.

2. Installation de traite selon la revendication 1, **caractérisée en ce que** l'ouverture supplémentaire représente un évidement d'entrée pour l'air contre une lèvre de la tête de manchon trayeur (10) et/ou une ouverture d'acheminement de l'air (9) latéralement par rapport à la tête de manchon trayeur (10).

3. Installation de traite selon la revendication 1 ou 2, **caractérisée en ce qu'**au moins une partie d'un système de tuyau flexible qui peut venir se raccorder au manchon trayeur (6) est transparente.

4. Installation de traite selon l'une quelconque des revendications précédentes, **caractérisée en ce qu'**elle présente au moins un gobelet trayeur (3) et au moins un premier et un deuxième manchon trayeur (6) pour un trayon (2), dans laquelle le premier manchon trayeur possède une élasticité inférieure à celle du deuxième manchon trayeur, dans laquelle le premier manchon trayeur est destiné à une première période d'utilisation contre le trayon et le deuxième manchon trayeur est destiné à une période d'utilisation suivante contre le même trayon (2).

5. Installation de traite selon l'une quelconque des revendications précédentes, présentant un élément de récolte (12) comprenant un trou pour l'air (16) et comprenant une ouverture de sortie pour l'air (19) qui est mise en relation avec le trou pour l'air (16), **caractérisée en ce que** l'ouverture de sortie pour l'air (19), dans une zone d'espace vide (18) qui est au moins directement adjacente à un conduit de récolte (13) pouvant en particulier s'y raccorder, débouche dans l'élément de récolte (12).

6. Installation de traite selon la revendication 5, **caractérisée en ce que** le trou pour l'air (16) débouche dans le conduit de récolte (13).

7. Procédé pour la traite d'animaux, en particulier de vaches laitières, avec une installation de traite selon la revendication 1, dans lequel est utilisée une trayeuse qui présente une dérivation pour la dérivation du lait à partir d'un trayon (2) d'un animal et un moyen de guidage pour la conduite du flux de lait à partir du trayon (2) jusque dans la dérivation, dans lequel le moyen de guidage interrompt de manière récurrente, en particulier de manière cyclique le flux de lait activé par l'intermédiaire de la dépression régnant dans la déviation, à travers l'ouverture (7) pour le trayon, dans lequel, au cours du processus de traite, de l'air est acheminé dans la dérivation à travers au moins une ouverture (9) pour l'acheminement de l'air, **caractérisé en ce que**, à la fin du processus de traite, une valeur de dépression de tête augmente, tandis qu'elle chute dans une phase C et D approximativement jusqu'à la pression ambiante.

8. Procédé selon la revendication 7, dans lequel la trayeuse présente en outre une enveloppe (6) pour le trayon destinée à l'application de la trayeuse contre le trayon (2) et à entourer le trayon (2), **caractérisé en ce que** l'air acheminé à travers l'ouverture (9) d'acheminement pour l'air est guidé au moins en partie entre l'enveloppe (6) pour le trayon et la périphérie externe du trayon (2) dans la direction longitudinale du trayon et s'introduit dans la dérivation.

9. Procédé selon l'une quelconque des revendications 7 et 8, dans lequel la trayeuse présente une zone d'entrée qui est, lorsque la trayeuse est appliquée contre le trayon (2), disposée dans la direction longitudinale du trayon, à l'écart de la dérivation, **caractérisé en ce que** l'air est guidé dans la zone d'entrée le long du trayon par l'intermédiaire d'une ouverture (9) d'acheminement de l'air, dans lequel l'ouverture (9) d'acheminement de l'air est disposé dans une paroi qui entoure le trayon (2).

10. Procédé selon l'une quelconque des revendications 7 à 9, **caractérisé en ce que**, également au cours de l'interruption du flux de lait, de l'air, en particulier conformément à la revendication 2, est acheminé à travers l'espace intermédiaire ménager entre l'enveloppe (6) pour le trayon et la périphérie externe du trayon (2) jusque dans la dérivation.

11. Procédé pour la traite d'animaux, en particulier de vaches laitières, avec une installation de traite selon la revendication 1, dans lequel est utilisée une trayeuse qui présente:
- une multitude de dérivations (8) pour la dérivation du lait à partir d'un ou de plusieurs animaux à traire,
- un élément de récolte (12) pour la récolte du lait à partir des dérivations (8) dans un espace vide de récolte, et
- un conduit de récolte (13) pour la dérivation du lait récolté à partir de l'espace vide de récolte,
dans lequel les espaces vides de guidage des dérivations (8) et du conduit de récolte (13), ainsi que l'espace vide de récolte pour la dérivation du lait génèrent au moins en partie une chute de pression et présentent une dépression par rapport à leur environnement, dans lequel, directement dans une zone d'espace vide (18), dans laquelle du lait récolté s'écoule, de l'air est acheminé à partir de l'environnement, **caractérisé en ce que** l'air est guidé dans la zone d'espace vide (18) d'une manière telle qu'il s'écoule dans la zone d'espace vide (18) dans la direction d'écoulement du lait récolté.

12. Procédé selon la revendication 11, **caractérisé en ce que** l'air est guidé à partir de l'environnement à travers une entrée pour l'air (16) jusque dans un conduit (17) pour l'air et s'évacue via une sortie (19) pour l'air du conduit pour l'air (17) dans la zone d'espace vide (18).

13. Procédé selon la revendication 11 ou 12, **caractérisé en ce que** ce dernier est mis en oeuvre de manière conjointe avec un procédé selon la revendication 7.
